Europäisches Patentamt

European Patent Office

Office européen des brevets

(19)

(11) Numéro de publication : **0 282 386 B1**

(12) # FASCICULE DE BREVET EUROPEEN

(45) Date de publication du fascicule du brevet :
10.07.91 Bulletin 91/28

(51) Int. Cl.⁵ : **C04B 35/52, C04B 41/89**

(21) Numéro de dépôt : 88400399.7

(22) Date de dépôt : 22.02.88

(54) Matériau composite à matrice et fibres de renforcement en carbone et son procédé de fabrication.

(30) Priorité : 25.02.87 FR 8702496

(43) Date de publication de la demande :
14.09.88 Bulletin 88/37

(45) Mention de la délivrance du brevet :
10.07.91 Bulletin 91/28

(84) Etats contractants désignés :
AT BE CH DE ES FR GB IT LI LU NL SE

(56) Documents cités :
EP-A- 0 121 797
EP-A- 0 127 491
EP-A- 0 133 315
FR-A- 1 594 182
FR-A- 2 104 563
FR-A- 2 533 501
US-A- 4 425 407

(56) Documents cités :
MATERIALS RESEARCH BULLETIN, vol. 21,
no. 11, 1986, pages 1391-1395, Pergamon Journals Ltd, Oxford, GB; I. JAWED et al.:
"Oxidation protection in carbon-carbon
composites"

(73) Titulaire : AEROSPATIALE Société Nationale
Industrielle
37, Boulevard de Montmorency
F-75781 Paris Cédex 16 (FR)

(72) Inventeur : Rousseau, Gérard
22, Hameau de Villepreux
F-33160 Saint Aubin de Médoc (FR)
Inventeur : Pastureau, Nicole
3, rue du Canter
F-33320 Eysines (FR)

(74) Mandataire : Mongrédien, André et al
c/o SOCIETE DE PROTECTION DES
INVENTIONS 25, rue de Ponthieu
F-75008 Paris (FR)

## Description

La présente invention a pour objet un matériau composite du type carbone-carbone, inoxydable à haute température, et en particulier jusqu'à 1700°C dans l'air, ainsi que son procédé de fabrication.

Ce matériau composite est destiné à être utilisé plus spécialement comme protection thermique de haute performance pour des véhicules spatiaux (navette ou aéronef) devant résister aux échauffements provoqués par le frottement de l'air, lors de leur entrée à grande vitesse dans l'atmosphère.

Toutefois, l'invention s'applique aussi dans d'autres secteurs industriels nécessitant un matériau réfractaire gardant de bonnes propriétés mécaniques au-dessus de 1100°C en milieu corrosif. Ceci est en particulier le cas des moteurs de turbine à rendement amélioré travaillant à haute température, entre 1300 et 1400°C, et de certains récupérateurs de chaleur industriels.

Le problème majeur des matériaux composites du type carbone-carbone est leur oxydation dans l'air à haute température, entraînant la transformation du carbone en CO ou $CO_2$ et donc la dégradation, voire même la destruction, du matériau composite. Pour éviter cette oxydation, différents procédés ont déjà été envisagés concernant la protection des matériaux en carbone basée sur l'utilisation d'un revêtement de carbure de silicium formé à la surface externe des pièces en matériau composite.

Ce revêtement externe en SiC peut être obtenu par siliciuration du carbone de la partie externe du matériau composite. Cette siliciuration superficielle du matériau composite est réalisée soit par "pack-cémentation" comme décrit dans le document US-A-3 095 316, soit par décomposition chimique en phase vapeur (DCPV) comme décrit dans le document US-A-3 406 044.

Ce revêtement externe peut aussi être réalisé directement par dépôt chimique en phase vapeur de carbure de silicium par craquage de vapeur de chloro-silane seul ou associé à de l'hydrogène et/ou à des hydrocarbures, comme décrit dans l'article de S. AUDISTO dans l'Actualité Chimique de septembre 1978, p. 25-33.

D'autres techniques associent la siliciuration du carbone superficiel du matériau composite à un dépôt chimique en phase vapeur de SiC (voir brevet US-A-3 406 044).

Les techniques ci-dessus de formation d'une couche de SiC sur un matériau composite du type carbone-carbone conduisent à l'obtention d'une couche fissurée du fait de l'écart des coefficients de dilatation entre le carbone du matériau composite et le carbure de silicium du revêtement externe.

Pour remédier à cet inconvénient, il a été prévu d'associer au dépôt du revêtement en SiC le dépôt d'un revêtement en bioxyde de silicium ($SiO_2$) destiné à colmater les fissures du revêtement de protection en SiC (voir documents "Weight Uncertainty analysis for space shuttle reinforced carbon-carbon" —SAWEPAPER 1265 — 37th Annual Conference 8.10 May 78. SAWE).

Afin d'améliorer le colmatage des fissures de la couche de SiC, et donc d'augmenter la protection du matériau du type carbone-carbone, on a aussi envisagé l'utilisation d'un revêtement à base de poudre de SiC et d'un verre à base de silicate de sodium additionné éventuellement de borate de sodium ou à base de phosphate d'aluminium ou d'alumine, comme décrit dans le document US-A-4 500 602. Ces verres ont pour but d'abaisser la température, de 1200 à 1300°C à 800°C, à partir de laquelle le colmatage des fissures de la couche de SiC devient efficace.

Le même type de résultat est obtenu en rajoutant du bore lors de la formation de la couche de SiC par pack-cémentation (voir brevet US-A-4 476 164). Le verre qui se forme alors naturellement sur le revêtement externe en SiC chauffé dans l'air, lors de la rentrée des véhicules spatiaux dans l'atmosphère en particulier, est un borosilicate à plus bas point de fusion que le dioxyde de silicium.

Tous les procédés décrits précédemment sont, à des degrés divers efficaces, mais ont tous l'inconvénient d'être des protections de surfaces fragiles, voire inopérantes si elles viennent à être interrompues sous l'effet d'un choc, d'une vibration ou d'un frottement intervenant, dans le cas particulier du domaine spatial avant ou au cours d'un vol d'un véhicule.

La présente invention a justement pour objet un matériau composite à matrice et à fibres de renforcement en carbone, revêtu d'un revêtement externe ainsi que son procédé de fabrication permettant de remédier à ces inconvénients tout en conservant la mise en oeuvre habituelle de ce type de matériau et plus particulièrement en préservant la déformabilité des substrats fibreux de manière à permettre leur mise en forme avant leur densification. Ce matériau composite est rendu inoxydable en présence d'air pour des températures allant jusqu'à 1700°C.

De façon plus précise, l'invention a pour objet un matériau composite comportant un substrat en fibre de carbone et un revêtement externe en carbure de silicium colmaté, caractérisé en ce que la surface de chaque fibre est revêtue d'une première couche fine en carbure de silicium, en ce que le substrat est noyé dans une matrice de carbone dopé avec du carbure de silicium amorphe à au plus 20% en poids de la matrice et en ce que le colmatage du revêtement externe comporte un verre borosilicaté.

Par fibres et matrice de carbone, il faut comprendre des fibres et une matrice réalisées indépendamment

2

en carbone vitreux ou en graphite.

De préférence, le substrat est obtenu par tissage.

L'utilisation de carbure de silicium à la surface des fibres du substrat et dans la matrice de carbone permet d'assurer une protection anti-oxydation en ralentissant fortement l'oxydation à coeur du matériau composite carbone-carbone amélioré, en cas de destruction accidentelle ou écaillage du revêtement externe.

Ainsi, les caractéristiques et l'efficacité du matériau composite sont garanties au moins jusqu'à la fin de la mission en cours (par exemple lors de la rentrée d'un véhicule spatial dans l'atmosphère).

Le ralentissement de pénétration de l'oxydation est notamment dû à l'oxydation préférentielle à haute température (supérieure à 600°C) du carbure de silicium (SiC) de la matrice par rapport au carbone ou graphite de cette dernière dans le cas d'une pénétration accidentelle d'oxygène dans la matrice. Cette oxydation du SiC donne de la silice (oxyde de silicium, dioxyde de silicium) se traduisant par un accroîssement de volume de l'ordre de 2,18 fois, qui augmente de ce fait le volume de la matrice en proportion du taux de SiC présent dans celle-ci.

Cet accroîssement de volume associé à la fusion de la silice (au-dessus de 1300°C) ferme les fissures et les pores de la matrice de carbone ralentissant ainsi très fortement la pénétration de l'oxygène dans le matériau composite et donc son oxydation.

Cette oxydation préférentielle du SiC de la matrice ne se réalise que s'il se présente sous forme très divisée. En effet le SiC n'est un carbure réfractaire que grâce à la formation à sa surface d'une couche protectrice de $SiO_2$ et la taille des grains de SiC doit être de l'ordre de grandeur de l'épaisseur de cette couche protectrice en $SiO_2$, c'est-à-dire inférieure à 0,05 micromètre.

De plus, la fine couche de SiC recouvrant chaque fibre du substrat, sans en altérer la propriété mécanique ni la souplesse, protège ces fibres de l'oxydation en ralentissant également la vitesse de pénétration de cette oxydation.

De façon avantageuse, la matrice renferme du carbure de silicium sous forme très divisée selon une proportion de 2 à 10% en poids de la matrice. Cette faible proportion de SiC dans la matrice, tout en assurant une protection efficace anti-oxydation, ne modifie en rien les propriétés physiques de la matrice en carbone.

Le revêtement externe en carbure de silicium, d'au plus 600 micromètres d'épaisseur, recouvrant toutes les surfaces externes du matériau, assure l'étanchéité du matériau composite à la pénétration de gaz oxydant, et d'oxygène en particulier.

Pour colmater les fissures du revêtement externe en carbure de silicium, le matériau composite selon l'invention est complété d'une imprégnation de silice, puis d'une autre imprégnation par un verre borosilicaté ($SiO_2$-$B_2O_3$). Cette dernière imprégnation constituant en fait le revêtement extérieur du matériau composite obtenu est l'ultime originalité de l'invention.

Ces colmatages avec $SiO_2$ et $SiO_2$-$B_2O_3$ permettent de ralentir fortement la vitesse de pénétration de l'oxygène dans le matériau composite, au travers du revêtement en SiC naturellement fissuré, dans le domaine de températures allant de 600°C à 1700°C. Pour les températures supérieures à 1300°C, c'est la silice qui assure le ralentissement et pour les températures inférieures à 1300°C, c'est le verre borosilicaté.

De façon avantageuse, la surface de chaque fibre carbonée est pourvue d'une seconde couche en carbone, notamment pyrolytique.

Cette couche de carbone recouvrant les fibres constitue une interface destinée à préserver, voire à améliorer les propriétés mécaniques du matériau composite. En effet, le glissement des feuillets graphitiques de ce carbone pyrolytique assure des liaisons fibres-matrice faibles conférant ainsi au matériau composite une bonne résilience.

Cette couche de carbone pyrolytique est extrêmement mince, au plus égale à 0,1 micromètre ; elle peut être déposée avant le dépôt de la couche de SiC recouvrant les fibres ou après le dépôt de cette couche de SiC.

Le substrat fibreux du matériau composite selon l'invention peut être formé de fibres de carbone ou de graphite, obtenues à partir de n'importe quel précurseur et en particulier à partir de polyacrylonitrile, connu sous l'abréviation P.A.N., de brai ou de rayonne.

Par ailleurs, selon les propriétés finales recherchées pour le matériau composite, ces fibres peuvent être courtes ou longues, de haute résistance ou de haut module et avoir subi des traitements éventuels de graphitation.

L'invention a aussi pour objet un procédé de fabrication d'un matériau composite du type carbone-carbone tel que décrit précédemment.

Selon une première caractéristique, ce procédé comprend les étapes suivantes :

(a) — formation d'un substrat déformable, ou structure, poreux constitué de fibres de carbone,
(b) — recouvrement de la surface de chaque fibre du substrat par une première couche fine en carbure

3

de silicium, gardant au substrat sa déformabilité,

(c) — mise en forme du substrat,

(d) — densification du substrat mis en forme, pour constituer la matrice, par un matériau en carbone renfermant du carbure de silicium finement divisé et amorphe, à au plus 20% en poids de la matrice,

(e) — recouvrement de la surface externe de la matrice par un revêtement externe en carbure de silicium,

(f) — colmatage du revêtement externe par un verre borosilicaté.

Selon l'invention, l'étape (c) du procédé peut être effectuée avant ou après l'étape (b).

Le substrat poreux est obtenu par tissage ou enroulement filamentaire des fibres de carbone suivant une, deux ou trois dimensions et selon "n" directions.

Selon l'invention, il est possible de former la première couche en carbure de silicium des fibres par décomposition chimique en phase vapeur (DCPV) d'au moins un organosilane substitué ou non par au moins un halogène. Cette décomposition chimique est réalisée en particulier avec une pression réduite, comprise entre 100 et 4000 Pascal environ, dans un four isotherme, à basse température, soit entre 850 et 1000°C.

Suivant la nature de l'organosilane, il est possible d'associer à ce dernier de l'hydrogène et/ou au moins un hydrocarbure gazeux.

Quel que soit le mélange utilisé, les conditions de pression de l'ordre de 500 Pa, de température de l'ordre de 950°C et de débit gazeux sont fixées de façon à ce que la cinétique du dépôt de SiC, catalysé par la surface de la fibre, soit faible devant la vitesse de diffusion des espèces chimiques utilisées. Cette diffusion permet de former une couche de SiC d'épaisseur uniforme allant de 0,1 à 0,2 micromètre aussi bien à coeur que vers l'extérieur du substrat.

Cette faible épaisseur de la couche de SiC préserve la déformabilité du substrat pour sa mise en forme avant densification ou rigidification.

La densification selon l'invention du substrat poreux, correspondant à la formation de la matrice en carbone dopé par du Sic, est obtenue par différentes modifications des procédés connus de densification par du carbone ou du graphite tels que la pyrolyse de résine thermodurcissable à haut taux de carbone ou le craquage d'hydrocarbure gazeux.

Dans le cas de la densification du substrat poreux par pyrolyse d'une résine thermodurcissable, l'apport en carbure de silicium dans la matrice de carbone est obtenue en greffant sur les molécules du polymère des groupes fonctionnels comportant des liaisons Si-O, ces dernières fournissant, lors des traitements thermiques de pyrolyse, le carbure de silicium divisé à l'échelle de l'atome.

De façon avantageuse, on utilise un polymère carboné comportant 6 à 25% en poids de groupes fonctionnels présentant des liaisons Si-O.

Ces liaisons Si-O sont des fonctions de type silicone.

Comme polymère pyrolysable permettant la fabrication d'une matrice de carbone ainsi que sa protection vis-à-vis de l'oxygène, on peut citer les résines phénoliques, du type résole, les résines furaniques sur lesquelles des fonctions silicones ont été greffées par réaction chimique.

La densification par une résine thermodurcissable modifiée comporte plusieurs cycles comprenant chacun l'imprégnation par la résine, la polymérisation, suivis d'un traitement thermique pour stabiliser la résine, d'une pyrolyse pour transformer la résine en coke dur et d'un traitement thermique à haute température pour transformer les groupements Si-O en carbure de silicium.

Il est aussi possible de former la matrice carbonée selon l'invention par décomposition chimique en phase vapeur à haute température d'un mélange formé d'au moins un hydrocarbure et d'au moins un organosilane substitué ou non par au moins un halogène.

Comme hydrocarbure, on peut utiliser des hydrocarbures saturés tels que le méthane, l'éthane, le propane, le butane.

Les organosilanes (ou alkylsilanes) utilisables dans l'invention sont le tétraméthylsilane et les chlorosilanes du type $C_xH_ySiCl_z$ avec x, y et z des nombres entiers positifs satisfaisant aux conditions $y + z = 4$, $y = 3x$ et $0 < z < 4$. Par exemple, on peut citer le trichlorométhylsilane et le dichlorodiméthylsilane.

Le pourcentage d'organosilane varie de 1 à 8% en poids du mélange hydrocarbure-organosilane. Ce pourcentage en organosilane dépend de la réactivité respective des gaz ou vapeurs aux températures et pressions utilisées qui sont imposées par la nature de ou des hydrocarbures choisis pour l'obtention d'un dépôt de carbone anisotrope ainsi que du taux de carbure de silicium souhaité dans la matrice de carbone.

Les conditions de densification sont également ajustées pour entraîner la formation de SiC sous forme très divisée et à l'état amorphe dans la matrice de carbone.

La densification du substrat ou structure poreux, selon la méthode utilisée, le taux de fibres et la nature des fibres permettent d'obtenir une densité finale du matériau composite allant de 1,4 à 1,8. En outre, la porosité ouverte de la matrice correspondant au volume des pores en communication est inférieure à 14%.

Selon une mise en oeuvre préférée du procédé de l'invention, on forme un revêtement externe en carbure de silicium par siliciuration de la surface externe de la structure densifiée. La siliciuration de la surface du matériau carbone-carbone est réalisée en particulier par "pack-cémentation", c'est-à-dire que le matériau à siliciurer est immergé dans un mélange de poudre qui dégage par chauffage des vapeurs d'espèces siliciurantes qui sont le silicium et/ou le monoxyde de silicium. Les réactions chimiques correspondantes sont les suivantes :

$$Si + C \rightarrow SiC$$
$$SiO + 2C \rightarrow SiC + CO$$

Le mélange de poudres utilisé fournissant les vapeurs de silicium et de monoxyde de silicium est constitué d'une poudre de silicium et d'au moins un oxyde quelconque apte à réagir avec le silicium pour fournir le monoxyde de silicium. L'oxyde utilisé peut être la silice ($SiO_2$) ou l'alumine ($Al_2O_3$).

Avantageusement, on ajoute à ce mélange de silicium et d'oxyde, de la poudre de carbure de silicium permettant de diluer les éléments réactifs et empêcher ainsi, lors de leur fusion, qu'ils s'agglomèrent et coulent sur la structure densifiée.

La température à atteindre pour former les vapeurs de silicium et de SiO doit être située au-dessus de 1650°C, mais être inférieure à 1800°C qui est la température de frittage du SiC. Un traitement thermique à une température supérieure à 1800°C se traduirait par un durcissement du mélange de poudres empêchant le démoulage des matériaux revêtus de la couche de SiC.

La siliciuration du carbone ou graphite de la matrice est effectuée en présence d'un gaz neutre tel que l'hélium, l'argon, le néon, etc.

La durée de l'immersion de la structure densifiée dans le mélange de poudre, à la température choisie, permet de fixer l'épaisseur de la couche de la matrice de carbone qui est transformée en SiC, cette couche présentant une épaisseur de 200 à 600 micromètres.

Pendant la siliciuration de la structure densifiée, les fibres de graphite ou en carbone, protégées par leur couche de carbure de silicium ne sont pas transformées totalement en carbure.

La siliciuration de la structure densifiée permet certes la formation d'un revêtement superficiel de 200 à 600 micromètres d'épaisseur en SiC, mais aussi la formation d'une couche sous-jacente en composite carbone/carbure de silicium de 40 à 200 micromètres, résultant de la siliciuration préférentielle du carbone de la matrice, le carbone des fibres n'étant que partiellement siliciuré du fait de la gaine en SiC des fibres ralentissant la transformation.

Du fait de la siliciuration préférentielle du carbone de la matrice et de la présence de la couche de SiC entourant les fibres du substrat, le revêtement externe en SiC obtenu par siliciuration présente une résilience supérieure à celle des composites carbone/carbone classiques et n'est pas susceptible de se décoller à l'inverse d'un revêtement de carbure de silicium sur un composite carbone-carbone classique.

La continuité du matériau composite où l'on passe progressivement du composite carbone/carbone au composite carbone/carbure de silicium assure une bonne adhésion du revêtement externe en SiC sur la matrice carbonée.

Selon l'invention, il est aussi possible de former le premier revêtement externe en SiC du composite carbone-carbone par décomposition chimique en phase vapeur (DCPV) d'un ou plusieurs organosilanes substitués ou non par au moins un halogène.

Suivant la nature du ou des organosilanes utilisés, on peut associer à ceux-ci au moins un hydrocarbure gazeux et/ou de l'hydrogène.

La décomposition est réalisée à température et pression constantes ; leurs valeurs ainsi que celles des débits gazeux dépendent de la nature des gaz utilisés et de la nature du dépôt recherché.

Afin d'obtenir un revêtement externe de SiC de bonne qualité, le dépôt de celui-ci par décomposition thermique d'organosilane peut être obtenu en deux phases successives.

Dans la première phase, des conditions d'infiltration sont réalisées de façon à obtenir une imprégnation et un colmatage des pores de la structure densifiée avec des pressions, températures et débits faibles favorisant la diffusion des gaz par rapport à la vitesse de réaction de décomposition de ceux-ci.

L'imprégnation et le colmatage des pores de la structure densifiée permet de stopper la pénétration du gaz oxydant (oxygène de l'air par exemple) par les fissures du revêtement externe de SiC déposé dans la deuxième phase et de plus d'accroître la qualité de son accrochage sur la matrice carbonée.

Dans la deuxième phase, les conditions de dépôt du revêtement externe de SiC sont réalisées en accroissant la cinétique de la réaction de décomposition en augmentant les pressions, les températures et les débits gazeux.

Les hydrocarbures utilisés pour réaliser le premier revêtement de SiC de la structure densifiée, comme pour la gaine de protection en SiC des fibres, sont en particulier le méthane, l'éthane, le propane et le butane

5

et les organosilanes sont notamment le tétraméthylsilane et les chlorosilanes de forme $C_xH_ySiCl_z$.

Comme mélange gazeux utilisables, on peut citer :
- le trichlorométhylsilane en présence d'hydrogène dans un rapport $[H_2]/[CH_3SiCl_3]$ = 4 à 12,
- le trichlorométhylsilane en présence de butane et d'hydrogène dans les rapports :
$[H_2]/[CH_3SiCl_3]$ = 1 à 8 et $[C_4H_{10}]/[CH_3SiCl_3]$ = 1 à 5,
- le tétraméthylsilane seul,
- le tétraméthylsilane additionné d'éthane en excès avec un rapport $[C_2H_6]/[(CH_3)_4Si]$ = 5 à 50, et
- le dichlorodiméthylsilane en présence de méthane et d'hydrogène dans les rapports :
$[H_2]/[(CH_3)_2SiCl_2]$ = 2 à 5 et $[CH_4]/[(CH_3)_2SiCl_2]$ = 2 à 5.

En vue de colmater les fissures du revêtement externe en SiC de la structure densifiée, on peut utiliser un revêtement de silice ($SiO_2$) déposé à la surface et dans lesdites fissures du revêtement de SiC par imprégnation sous vide dans une solution alcoolique de silicate d'alkyle et notamment de polysilicate d'éthyle ou d'orthosilicate d'éthyle. Le nombre d'imprégnation se situe entre 2 et 8.

Entre chaque imprégnation, un séchage vers 100-110°C est effectué et après la dernière imprégnation, le matériau subit une cuisson.

En vue d'améliorer la protection du matériau composite selon l'invention, on réalise un colmatage supplémentaire sur le revêtement en silice avec un verre borosilicate ($SiO_2$-$B_2O_3$) dont la proportion en oxyde de bore varie de 1 à 10% en poids.

Ce revêtement en verre est déposé par imprégnation sous vide à partir d'une solution gélifiante obtenue en particulier par hydrolyse puis polycondensation d'un alcoolate de bore et d'un alcoolate de silicium dans les proportions appropriées pour obtenir un verre de composition voulue en $B_2O_3$.

Le nombre d'imprégnations dans cette solution gélifiante se situe entre 1 et 3. Entre chacune de ces imprégnations, un séchage est effectué et la dernière imprégnation est suivie d'une cuisson.

Selon une autre caractéristique du procédé de l'invention, les fibres de la structure poreuse peuvent être revêtues d'une couche de carbone anisotrope obtenue par DCPV d'un ou plusieurs hydrocarbures. Ce dépôt de carbone anisotrope est réalisé dans des conditions favorisant la diffusion des hydrocarbures dans la structure carbonée par rapport à leur vitesse de décomposition sur la surface des fibres ; ces conditions sont des températures d'environ 1000°C, des pressions d'environ 1000 Pa et des débits gazeux faibles. Ceci permet d'obtenir sur chaque fibre un dépôt uniforme d'au plus 0,1 micromètre de carbone pyrolytique dont les feuillets graphitiques sont orientés parallèlement à la surface de la fibre correspondante.

D'autres caractéristiques et avantages de l'invention ressortiront mieux de la description qui va suivre, donnés à titre illustratif et non limitatif en référence aux figures annexées, dans lesquelles :
- les figures 1a et 1b représentent schématiquement, en coupe longitudinale, un matériau composite selon l'invention dont le revêtement SiC est obtenu respectivement par siliciuration et DCPV,
- les figures 2a et 2b représentent schématiquement, en coupe longitudinale, une fibre carbonée d'un matériau composite protégée selon l'invention, et
- la figure 3 est un diagramme illustrant les différentes étapes du procédé de fabrication d'un matériau composite selon l'invention.

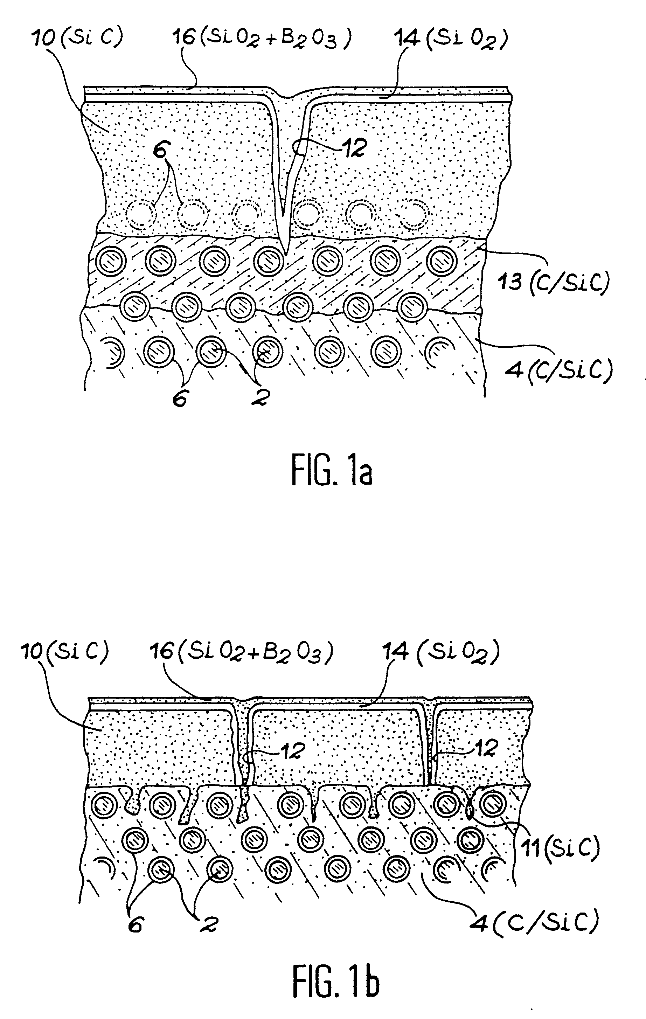

Sur les figures 1a et 1b, on a représenté un matériau composite carbone/carbone comportant des fibres de renforcement 2 en carbone, noyées dans une matrice 4 en carbone pyrolytique contenant, selon l'invention, au plus 20% et par exemple de 2 à 10% en poids de carbure de silicium diminuant fortement l'oxydabilité de la matrice carbonée en présence d'oxygène jusqu'à 1700°C.

Les fibres 2 sont par exemple des fibres enroulées suivant une même direction et présentant une épaisseur de 10 micromètres environ.

Selon l'invention, chaque fibre 2 est revêtue d'une couche 6 de carbure de silicium ayant une épaisseur de 0,1 à 0,2 micromètre environ, protégeant la fibre d'une oxydation éventuelle en ralentissant la diffusion de l'oxygène. Cette couche de carbure de silicium est éventuellement associée à une couche 8 de carbone pyrolytique de moins de 0,100 micromètre d'épaisseur.

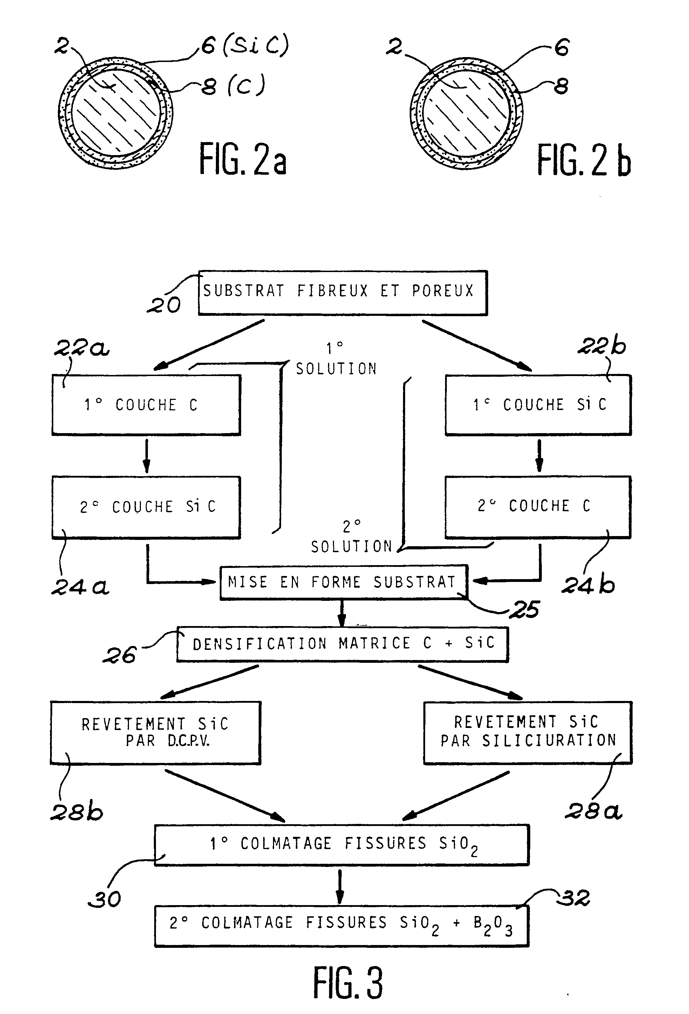

Cette couche de carbone pyrolytique 8 peut être intercalée entre la fibre 2 et la couche de carbure de silicium 6, comme représenté sur la figure 2a ou bien recouvrir la couche de SiC, comme représenté sur la figure 2b.

Selon l'invention, le matériau carbone-carbone, résultant de la combinaison du substrat de fibres 2, 6 et de la matrice 4, comme représenté sur les figures 1a et 1b, après densification, est recouvert d'un revêtement 10 en carbure de silicium. Les fissures 12 de ce revêtement 10 en carbure de silicium sont colmatées avec de la silice 14 à raison de 2 à 5 micromètres d'épaisseur. Ce colmatage 14 de silice est complété par un verre borosilicaté 16 ($SiO_2$-$B_2O_3$) de 1 à 4 micromètres d'épaisseur contenant 1 à 10% en poids d'oxyde de bore.

Le revêtement externe 10 en SiC seul (figure 1b), obtenu par DCPV, présente une épaisseur de 40 à 600 micromètres alors que le revêtement externe 10 en SiC associé à une couche sous-jacente 13 en C/Sic (figure

EP 0 282 386 B1

1a), obtenus par siliciuration, présente une épaisseur de 200 à 600 micromètres, la couche sous-jacente 13 ayant alors une épaisseur de 40 à 200 micromètres.

Des tests dans l'air à 1500°C ont été effectués :

a) — sur un matériau composite de l'art antérieur, formé uniquement de fibres de carbone noyées dans une matrice de carbone,

b) — sur un matériau composite de l'invention comportant des fibres de carbone revêtues uniquement de la couche de carbure de silicium et une matrice carbonée contenant 3% en poids de carbure de silicium, et siliciuré,

c) — sur un autre matériau composite de l'invention comportant des fibres de carbone revêtues à la fois de la couche de carbone pyrolytique et de la couche d'un carbure de silicium, une matrice carbonée contenant 3% de carbure de silicium, ce matériau étant en outre recouvert successivement de carbure de silicium, puis colmaté avec de la silice et un verre de $SiO_2$-$B_2O_3$.

Les vitesses d'oxydation de ces trois matériaux composites sont respectivement de 2,2 kg/m²/h, de 0,05 kg/m²/h et de 0,002 kg/m²/h.

Il ressort de ces tests que le carbone du matériau composite selon l'invention est difficilement oxydable.

On va maintenant donner des exemples de fabrication d'un matériau composite selon l'invention.

## EXEMPLE 1

Cet exemple de fabrication va être décrit en référence à la figure 3.

La première étape du procédé, comme représenté par le bloc 20, consiste à former une structure poreuse déformable en carbone, en tissant des mèches de fibres de carbone selon trois directions orthogonales, de façon connue. Ces mèches de fibres sont formées d'environ 3000 filaments de type TORAY haut module M40.

La seconde étape du procédé, schématisée par le bloc 22a, consiste à déposer une couche d'environ 0,08 micromètre d'épaisseur de carbone pyrolytique sur chaque fibre. Ce carbone est formé dans un four chauffé à 1100°C dans lequel circule du méthane sous une pression de 15 mbars, pendant 2 heures.

L'étape suivante du procédé, représenté par le bloc 24a, consiste à faire circuler dans le même four un mélange de trichlorométhylsilane et d'hydrogène dans un rapport de $[H_2]/[CH_3SiCl_3] = 8$ à une pression de 10 mbars, pendant 10 heures, afin de former un dépôt de SiC de 0,1 à 0,2 micromètre. Le substrat est alors mis en forme comme indiqué en 25.

Les étapes suivantes se rapportent à la densification de la structure poreuse, en vue de former la matrice composite C/SiC, comme indiqué par le bloc 26 de la figure 3.

A cet effet, la structure poreuse est imprégnée sous vide par une résine phénolique sur laquelle 10% de fonction silicone ont été greffés. La structure imprégnée est alors polymérisée sous une pression de 5 bars jusqu'à une température de 180°C puis écrouté afin d'enlever l'excès de résine. On effectue alors une post-cuisson à 250°C, pendant 4 heures, afin de stabiliser la résine polymérisée et réticulée.

On réalise ensuite une pyrolyse de la résine stabilisée à une température de 900°C permettant de transformer la chaîne carbonée de ce polymère en coke dur (ou carbone vitreux).

Un post-traitement thermique entre 1200 et 1800°C permet de transformer les liaisons Si-O du polymère en SiC.

Ce traitement d'imprégnation, de polymérisation, de post-cuisson, de pyrolyse et de post-traitement thermique est effectué cinq fois de suite.

La densité finale du matériau est de l'ordre de 1,5. Par ailleurs, la porosité ouverte de cette structure est inférieure à 7%.

Le matériau ainsi obtenu est alors usiné puis siliciuré dans un mélange de poudres constitué de 8 à 12% en poids d'alumine, de 25 à 35% en poids de silicium et de 55 à 65% en poids de carbure de silicium ; ces poudres présentent une granulométrie de 30 à 70 micromètres (soit 200 à 325 mesh) et une densité apparente, après tassage, de 1.

Cette siliciuration est réalisée dans un creuset en graphite, disposé dans le même four, que précédemment en atmosphère d'argon et 1700°C, pendant 2 heures.

On forme ainsi, comme représenté sur la figure 1b, un revêtement superficiel de SiC 10 et une couche sous-jacente 13 de composite C/SiC, l'épaisseur totale de la couche protectrice (SiC + C/SiC) variant de 40 à 600 micromètres.

Le revêtement superficiel 10 s'étend au-delà de la première rangée de fibres, représentées en traits mixtes, de la matrice 4 et la teneur en SiC de la couche 13 est supérieure à celle de la matrice.

Cette étape est illustrée par le bloc 28a de la figure 3.

La structure densifiée et siliciurée, ci-dessus, est alors imprégnée sous vide avec une solution alcoolique de silicate d'éthyle contenant :

7

EP 0 282 386 B1

```
- polysilicate d'éthyl :   1    mole,
- éthanol             :  13,3 moles,
- H O                 :   5,1 moles,
   2
- HCL                 :   1,6 moles/litre d'eau
```

Après cette imprégnation, un séchage d'une heure entre 100 et 110°C est effectué.

Ces deux opérations d'imprégnation puis de séchage sont renouvelées 4 fois. Finalement, une cuisson du revêtement à 300°C est effectuée pendant environ 6 heures.

Le colmatage des fissures obtenu est un revêtement de silice ($SiO_2$) de 2 à 5 micromètres d'épaisseur selon les fissures. Cette étape est illustrée par le bloc 30 de la figure 3.

Pour parfaire le colmatage des fissures du revêtement externe 10 de carbure de silicium, on forme alors sur le revêtement de $SiO_2$ un verre de $SiO_2$-$B_2O_3$ ; l'étape correspondante est représentée par le bloc 32 de la figure 3.

A cet effet, on imprègne la structure obtenue sous vide dans une solution d'alcogel précurseur du verre borosilicate. Cet alcogel est obtenu par hydrolyse puis polycondensation d'un alcoolate de silicium et d'un alcoolate de bore dans des proportions de 91% d'alcoolate de silicium et 9% d'alcoolate de bore.

Après imprégnation de la structure par l'alcogel, un séchage d'une heure entre 100 et 110°C est effectué. Les étapes d'imprégnation et de séchage sont renouvelées deux fois. Finalement une cuisson de 6 heures à environ 300°C est effectuée.

EXEMPLE 2

Dans les mêmes conditions opératoires que décrites ci-dessus, il est possible d'assurer la protection de la structure fibreuse en déposant tout d'abord la couche de carbure de silicium puis la couche de carbone pyrolytique. Ces étapes sont schématisées respectivement sur la figure 3 par les blocs 22b et 24b.

EXEMPLE 3

Cet exemple se différencie de l'exemple 1 par le fait que le revêtement externe en carbure de silicium de la matrice est réalisé, non plus par siliciuration superficielle de la matrice mais par le dépôt chimique en phase vapeur d'une couche de carbure de silicium. Cette étape est illustrée par le bloc 26b de la figure 3.

A cet effet, la structure poreuse densifiée est placée dans un four isotherme chauffé à 900°C dans lequel circule un mélange de trichlorométhylsilane et d'hydrogène dans le rapport $[H_2]/[CH_3SiCl_3] = 8$, sous une pression de 10 mbars et un débit gazeux de l'ordre de 8 Nl/h (normaux litres par heure), selon le volume du four utilisé.

Cette opération est effectuée pendant 4 heures. Elle permet, comme représenté sur la figure 1b, la diffusion de carbure de silicium à l'intérieur de la structure densifiée colmatant ainsi les pores 11 de la matrice.

On soumet alors l'une des faces de la structure densifiée au même mélange gazeux, à une pression de 100 mbars, une température de 1100°C et un débit gazeux multiplié par 10, pendant 8 heures. Ceci permet d'obtenir un revêtement externe 10 en carbure de silicium de 100 micromètres.

La structure est alors retournée et un nouveau cycle est réalisé dans les mêmes conditions.

Le colmatage avec la silice et le verre borosilicaté est réalisé ensuite comme dans l'exemple 1.

EXEMPLE 4

Cet exemple se différencie du premier exemple par la façon de réaliser la densification de la structure poreuse (bloc 26).

Dans cet exemple, la densification est réalisée par décomposition chimique en phase vapeur d'un mélange gazeux contenant du méthane et du tétraméthylsilane dans un rapport $[CH_4]/[Si(CH_3)_4] = 500$. Cette décomposition chimique est réalisée dans un four isotherme, maintenu à 1100°C, pendant 700 heures environ, le mélange gazeux étant mis en circulation sous une pression de 10 mbars.

La protection de la matrice carbonée par le revêtement de carbure de silicium externe est alors réalisée comme dans l'exemple 1 ou 3. Ensuite, les colmatages des fissures par la silice et le verre borosilicaté sont effectués comme dans l'exemple 1.

Les exemples ci-dessus sont relatifs à la protection thermique d'aéronefs rentrant à grande vitesse dans l'atmosphère. Mais bien entendu, le matériau composite selon l'invention peut être utilisé dans tout secteur industriel où l'on recherche un matériau réfractaire et/ou inoxydable, gardant de bonnes propriétés mécaniques au-dessus de 1100°C en milieu corrosif et notamment oxydable ; ceci est le cas de certains moteurs de turbine ou de certains récupérateurs industriels de chaleur.

Suivant l'application envisagée, la durée des dépôts et des traitements thermiques, leur épaisseur ainsi que leur nombre pourront être modifiés. En particulier, les dépôts de carbone pyrolytique sur la structure fibreuse, le colmatage des fissures du revêtement par la silice ou le verre borosilicaté et éventuellement le revêtement externe de la matrice en carbure de silicium pourront être supprimés.

## Revendications

1. Matériau composite comportant un substrat en fibre de carbone (2) et un revêtement externe (10) en carbure de silicium colmaté, caractérisé en ce que la surface de chaque fibre (2) est revêtue d'une première couche fine (6) en carbure de silicium, en ce que le substrat est noyé dans une matrice (4) de carbone dopé avec du carbure de silicium amorphe à au plus 20% en poids de la matrice et en ce que le colmatage du revêtement externe (10) comporte un verre borosilicaté (16).

2. Matériau composite selon la revendication 1, caractérisé en ce que la matrice (4) renferme de 2 à 10% en poids de carbure de silicium.

3. Matériau composite selon la revendication 1 ou 2, caractérisé en ce que le substrat est tissé.

4. Matériau composite selon l'une quelconque des revendications 1 à 3, caractérisé en ce que le colmatage du revêtement externe comprend un colmatage en silice (14).

5. Matériau composite selon la revendication 1, caractérisé en ce que le revêtement externe (10) en carbure de silicium est colmaté avec un premier colmatage (14) en oxyde de silicium puis un second colmatage (16) en verre de $SiO_2-B_2O_3$, le second colmatage (16) constituant le revêtement le plus externe.

6. Matériau composite selon l'une quelconque des revendications 1 à 5, caractérisé en ce que chaque fibre (2) est pourvue d'une seconde couche mince en carbone (8), en contact avec la première couche (6).

7. Matériau composite selon l'une quelconque des revendications 1 à 6, caractérisé en ce qu'il comprend sous le revêtement externe (10) en SiC une couche sous-jacente (13) en composite carbone/carbure de silicium.

8. Matériau composite selon l'une quelconque des revendications 1 à 7, caractérisé en ce que le revêtement externe (10) en carbure de silicium a une épaisseur d'au plus 600 micromètres.

9. Matériau composite selon l'une quelconque des revendications 1 à 8, caractérisé en ce que la première couche (6) présente une épaisseur de 0,1 à 0,2 micromètre.

10. Matériau composite selon la revendication 6, caractérisé en ce que la seconde couche (8) présente une épaisseur d'au plus 0,1 micromètre.

11. Procédé de fabrication d'un matériau composite comportant un substrat en fibres de carbone (2) noyé dans une matrice (4), caractérisé en ce qu'il comprend les étapes suivantes :

(a) — formation d'un substrat poreux déformable, constitué de fibres de carbone (2),

(b) — recouvrement de la surface de chaque fibre (2) du substrat par une première couche fine (6) en carbure de silicium, gardant au substrat sa déformabilité,

(c) — mise en forme du substrat,

(d) — densification du substrat mis en forme, pour constituer la matrice, par un matériau en carbone renfermant du carbure de silicium amorphe, finement divisé à au plus 20% en poids de la matrice (4),

(e) — recouvrement de la surface externe de la matrice par un revêtement externe (10) en carbure de silicium,

(f) — colmatage du revêtement externe par un verre borosilicaté (16).

12. Procédé de fabrication selon la revendication 11, caractérisé en ce que la densification consiste à pyrolyser un polymère carboné comportant des groupes fonctionnels présentant des liaisons Si-O.

13. Procédé de fabrication selon la revendication 12, caractérisé en ce que le polymère est une résine phénolique sur laquelle ont été greffés des groupes fonctionnels comportant des liaisons Si-O.

14. Procédé de fabrication selon la revendication 12 ou 13, caractérisé en ce que lesdits groupes fonctionnels représentent 6 à 15% en poids du polymère.

15. Procédé de fabrication selon la revendication 11, caractérisé en ce que la densification consiste à décomposer thermiquement un mélange d'hydrocarbure et d'organosilane substitué ou non par au moins un halogène.

16. Procédé de fabrication selon la revendication 15, caractérisé en ce que l'organosilane constitue 1 à 8% en poids du mélange.

17. Procédé de fabrication selon l'une quelconque des revendications 11 à 16, caractérisé en ce que la première couche (6) et/ou le revêtement externe (10) sont obtenus par DCPV d'au moins un organosilane substitué ou non par au moins un halogène.

18. Procédé de fabrication selon l'une quelconque des revendications 11 à 16, caractérisé en ce que la première couche (6) et/ou le revêtement externe (10) sont obtenus par DCPV d'un mélange contenant au moins un organosilane substitué ou non par au moins un halogène et au moins un composé choisi parmi l'hydrogène et un hydrocarbure.

19. Procédé de fabrication selon l'une quelconque des revendications 11 à 18, caractérisé en ce que les pores (11) du substrat densifié sont au préalable colmatés avec du carbure de silicium déposé par DCPV dans des conditions d'infiltration.

20. Procédé de fabrication selon l'une quelconque des revendications 11 à 19, caractérisé en ce que le revêtement externe (10) est obtenu par siliciuration de la surface externe de la structure densifiée.

21. Procédé de fabrication selon l'une quelconque des revendications 11 à 20, caractérisé en ce que l'on réalise un colmatage des fissures (12) du revêtement externe (10) avec de la silice (14).

22. Procédé de fabrication selon la revendication 21, caractérisé en ce que l'on réalise le colmatage en silice (14) par imprégnation par une solution alcoolique d'un polysilicate (16).

23. Procédé de fabrication selon l'une quelconque des revendications 11 à 22, caractérisé en ce que l'on réalise le colmatage en verre borosilicate (16) par imprégnation de la structure densifiée dans un mélange d'alcoogel de silicium et d'alcoogel de bore.

24. Procédé de fabrication selon l'une quelconque des revendications 11 à 23, caractérisé en ce que l'on recouvre la surface de chaque fibre du substrat poreux par une seconde couche (8) en carbone, après la mise en place de la couche (6) de SiC.

25. Procédé de fabrication selon l'une quelconque des revendications 11 à 23, caractérisé en ce que les fibres (6) sont recouvertes d'une couche (8) de carbone avant mise en place de la couche (6) de SiC.

26. Procédé de fabrication selon la revendication 24 ou 25, caractérisé en ce que la couche (8) de carbone est formée par DCPV d'au moins un hydrocarbure.

## Patentansprüche

1. Verbundwerkstoff mit einem Substrat aus Karbonfasern (2) und einer äußeren Verkleidung (10) aus aufgefülltem Siliziumkarbid, dadurch gekennzeichnet, daß die Oberfläche Jeder Faser mit einer ersten dünnen Schicht (6) aus Siliziumkarbid überzogen ist, daß das Substrat in eine Matrix (4) aus Kohlenstoff eingebettet ist, die mit höchstens 20 Gewichtsprozent der Matrix mit amorphem Siliziumkarbid dotiert ist, und daß die Auffüllung der äußeren Verkleidung (10) ein Borosilikatglas (16) umfaßt.

2. Verbundwerkstoff nach Anspruch 1, dadurch gekennzeichnet, daß die Matrix (4) 2 bis 10 Gewichtsprozent Siliziumkarbid umfaßt.

3. Verbundwerkstoff nach Anspruch 1 oder 2, dadurch gekennzeichnet, daß das Substrat gewoben ist.

4. Verbundwerkstoff nach einem der Anspruch 1 bis 3, dadurch gekennzeichnet, daß die Auffüllung der äußeren Verkleidung eine Auffüllung mit Siliziumoxid (14) umfaßt.

5. Verbundwerkstoff nach Anspruch 1, dadurch gekennzeichnet, daß die äußere Verkleidung (10) aus Siliziumkarbid mit einer ersten Auffüllung (14) aus Siliziumoxid und einer zweiten Auffüllung (16) aus $SiO_2$-$B_2O_3$-Glas aufgefüllt ist, wobei die zweite Auffüllung (16) die äußerste Verkleidung bildet.

6. Verbundwerkstoff nach einem der Ansprüche 1 bis 5, dadurch gekennzeichnet, daß Jede Faser (2) mit einer zweiten dünnen Karbonschicht (8) versehen ist, die mit der ersten Schicht (6) in Berührung steht.

7. Verbundwerkstoff nach einem der Ansprüche 1 bis 6, dadurch gekennzeichnet, daß er unter der äußeren VerkLeidung (10) aus SiC eine darunterliegende Verbundschicht (13) aus Kohlenstoff/Siliziumkarbid umfaßt.

8. Verbundwerkstoff nach einem der Ansprüche 1 bis 7, dadurch gekennzeichnet, daß die äußere Verkleidung (10) aus Siliziumkarbid eine Dicke von höchstens 600 Mikrometer besitzt.

9. Verbundwerkstoff nach einem der Ansprüche 1 bis 8, dadurch gekennzeichnet, daß die erste Schicht (6) eine Dicke von 0,1 bis 0,2 Mikrometer aufweist.

10. Verbundwerkstoff nach Anspruch 6, dadurch gekennzeichnet, daß die zweite Schicht (8) eine Dicke von höchstens 0,1 Mikrometer aufweist.

11. Verfahren zur Herstellung eines Vorbundwerkstoffs mit einem Substrat (2) aus Kohlefasern, das in eine Matrix (4) eingebettet ist, dadurch gekennzeichnet, daß es die folgenden Verfahrensschritte umfaßt :

(a) — Herstellung eines porösen, verformbaren Substrats aus Kohlefasern (2),

(b) — Bedecken der Oberfläche Jeder Faser (2) des Substrats mit einer ersten dünnen Schicht (6) aus Siliziumkarbid, die dem Substrat seine Verformbarkeit bewahrt,

(c) — Formgebung des Substrats,

(d) — Verdichtung des geformten Substrats durch ein Karbonmaterial, das mit höchstens 20 Gewichtsprozent der Matrix (4) fein verteiltes, amorphes Siliziumkarbid einschließt, um die Matrix zu bilden,

(e) — Bedecken der äußeren Oberfläche der Matrix mit einer äußeren Verkleidung (10) aus Siliziumkarbid,

(f) — Auffüllen der äußeren Verkleidung mit einem Borosilikatglas (16).

12. Herstellungsverfahren nach Anspruch 11, dadurch gekennzeichnet, daß die Verdichtung darin besteht, ein kohlenstoffhaltiges Polymer mit funktionellen Gruppen, die Si-O-Verbindung aufweisen, zu pyrolysieren.

13. Herstellungsverfahren nach Anspruch 12, dadurch gekennzeichnet, daß das Polymer ein Phenolharz ist, auf dem funktionelle Gruppen, die Si-O-Verbindung aufweisen, aufgepfropft sind.

14. Herstellungsverfahren nach Anspruch 12 oder 13, dadurch gekennzeichnet, daß die funktionellen Gruppen 6 bis 15 Gewichtsprozent des Polymers bilden.

15. Herstellungsverfahren nach Anspruch 11, dadurch gekennzeichnet, daß die Verdichtung darin besteht, eine Mischung aus Kohlenwasserstoff und Organosilan, daß mit wenigstens einem Halogen substituiert ist oder nicht, thermisch zu zersetzen.

16. Herstellungsverfahren nach Anspruch 15, dadurch gekennzeichnet, daß das Organosilan 1 bis 8 Gewichtsprozent der Mischung bildet.

17. Herstellungsverfahren nach einem der Ansprüche 11 bis 16, dadurch gekennzeichnet, daß die erste Schicht (6) und/oder die äußere Verkleidung (10) durch chemische Zersetzung in der Dampfphase von wenigstens einem Organosilan, das mit wenigstens einem Halogen substituiert ist oder nicht, erhalten werden.

18. Herstellungsverfahren nach einem der Ansprüche 11 bis 16, dadurch gekennzeichnet, daß die erste Schicht (6) und/oder die äußere Verkleidung (10) durch chemische Zersetzung in der Dampfphase von einer Mischung, die wenigstens ein Organosilan, das mit wenigstens einem Halogen substituiert ist oder nicht, und wenigstens eine Verbindung, die aus dem Wasserstoff und einem Kohlenwasserstoff ausgewählt wird, enthält, erhalten wird.

19. Herstellungsverfahren nach einem der Ansprüche 11 bis 18, dadurch gekennzeichnet, daß die Poren (11) des verdichteten Substrats zunächst mit durch chemishe Dampfphasenzersetzung unter Infiltrationsbedingungen abgeschiedenem Siliziumkarbid aufgefüllt werden.

20. Herstellungsverfahren nach einem der Ansprüche 11 bis 19, dadurch gekennzeichnet, daß die äußere Verkleidung (10) durch Silizidieren der äußeren Oberfläche der verdichteten Struktur erhalten wird.

21. Herstellungsverfahren nach einem der Ansprüche 11 bis 20, dadurch gekennzeichnet, daß man ein Auffüllen der Risse (12) der äußeren Verkleidung (10) mit Siliziumoxid (14) erreicht.

22. Herstellungsverfahren nach Anspruch 21, dadurch gekennzeichnet, daß man das Auffüllen mit Siliziumoxid (14) durch Imprägnieren mit einer alkoholischen Polysilikatlösung (16) durchführt.

23. Herstellungsverfahren nach einem der Ansprüche 11 bis 22, dadurch gekennzeichnet, daß man das Auffüllen mit Borosilikatglas (16) durch Imprägnieren der verdichteten Struktur mit einer Mischung aus Siliziumalkogel und aus Boralkogel durchführt.

24. Herstellungsverfahren nach einem der Ansprüche 11 bis 23, dadurch gekennzeichnet, daß man die Oberfläche jeder Faser des porösen Substrats nach dem Anbringen der SiC-Schicht (6) mit einer zweiten Karbonschicht (8) bedeckt.

25. Herstellungsverfahren nach einem der Ansprüche 11 bis 23, dadurch gekennzeichnet, daß die Fasern (2) vor dem Anbringen der SiC-Schicht (6) mit einer Karbonschicht (8) bedeckt werden.

26. Herstellungsverfahren nach Anspruch 24 oder 25, dadurch gekennzeichnet, daß die Karbonschicht (8) durch chemische Dampfphasenzersetzung von wenigstens einem Kohlenwasserstoff gebildet wird.

## Claims

1. Composite material having a carbon fibre substrate (2) and an outer filled silicon carbide covering (10), characterized in that the surface of each fibre (2) is covered with a first fine silicon carbide coating (6), in that the substrate is embedded in a carbon matrix (4) doped with amorphous silicon carbide and representing at the most 20% by weight of the matrix and in that the filling of the outer covering (10) utilizes a borosilicate glass (16).

2. Composite material according to claim 1, characterized in that the matrix (4) contains 2 to 10% by weight of silicon carbide.

3. Composite material according to claims 1 or 2, characterized in that the substrate is woven.

4. Composite material according to any one of the claims 1 to 3, characterized in that the filling of the outer covering comprises a silica filling (14).

5. Composite material according to claim 1, characterized in that the outer silicon carbide covering (10) is filled with a first silicon monoxide filling (14) and then a second $SiO_2$-$B_2O_3$ glass filling (16), the second filling (16) constituting the outer covering.

6. Composite material according to any one of the claims 1 to 5, characterized in that each fibre (2) is provided with a second thin carbon coating (8) in contact with the first coating (6).

7. Composite material according to any one of the claim 1 to 6, characterized in that, beneath the outer SiC covering (10), it has an underlying carbon-silicon carbide composite coating (13).

8. Composite material according to any one of the claims 1 to 7, characterized in that the outer silicon carbide covering (10) has a thickness of at the most 600 micrometres.

9. Composite material according to any one of the claim 1 to 8, characterized in that the first coating (6) has a thickness of 0.1 to 0.2 micrometre.

10. Composite material according to claim 6, characterized in that the second coating (8) has a thickness of at the most 0.1 micrometre.

11. Process for the production of a composite material having a substrate (2) of carbon fibres embedded in a matrix (4), characterized in that it comprises the following stages :
(a) formation of a deformable, porous substrate constituted by carbon fibres (2),
(b) covering the surface of each fibre (2) of the substrate by a first fine silicon carbide coating (6), so that the substrate retains its deformability,
(c) shaping the substrate,
(d) densification of the shaped substrate to form the matrix by a carbon material containing finely divided, amorphous silicon carbide and representing at the most 20% by weight of the matrix (4),
(e) covering the outer surface of the matrix with an outer silicon carbide covering (10),
(f) filling the outer covering using a borosilicate glass (16).

12. Production process according to claim 11, characterized in that the densification consists of pyrolizing a carbon-containing polymer having functional groups with Si-O bonds.

13. Production process according to claim 12, characterized in that the polymer is a phenolic resin to which have been grafted functional groups containing Si-O bonds.

14. Production process according to claims 12 or 13, characterized in that said functional groups represent 6 to 15% by weight of the polymer.

15. Production process according to claim 11, characterized in that the densification consists of thermally depositioning a mixture of hydrocarbon and organosilane, which may or may not be substituted by at least one halogen.

16. Production process according to claim 15, characterized in that the organosilane constitutes 1 to 8% by weight of the mixture.

17. Production process according to any one of the claims 11 to 16, characterized in that the first coating (6) and/or the outer covering (10) are obtained by CPVD of at least one organosilane, substituted or not substituted by at least one halogen.

18. Production process according to any one of the claims 11 to 16, characterized in that the first coating (6) and/or the outer covering (10) are obtained by CVPD of a mixture containing at least one organosilane, substituted or not substituted by at least one halogen and at least one compound chosen from among hydrogen and a hydrocarbon.

19. Production process according to any one of the claims 11 to 18, characterized in that the pores (11) of the densified substrate are previously filled with silicon carbide deposited by CVPD under infiltration conditions.

20. Production process according to any one of the claims 11 to 19, characterized in that the outer covering (10) is obtained by silicidation of the outer surface of the densified structure.

21. Production process according to any one of the claims 11 to 20, characterized in that cracks (12) of the outer covering (10) are filled with silica (14).

22. Production process according to claim 21, characterized in that the filling with silica (14) is carried out by impregnation using an alcoholic solution of a polysilicate (16).

23. Production process according to any one of the claims 11 to 22, characterized in that the filling with borosilicate glass (16) takes place by impregnating the densified structure in a mixture of silicon alcogel and boron alcogel.

24. Production process according to any one of the claims 11 to 23, characterized in that the surface of each fibre of the porous substrate is covered with a second carbon coating (8), following the putting into place of the SiC coating (6).

25. Production process according to any one of the claims 11 to 23, characterized in that the fibres are covered with a carbon coating (8) before putting into place the SiC coating (6).

26. Production process according to claims 24 or 25, characterized in that the carbon coating (8) is formed by the CVPD of at least one hydrocarbon.

FIG. 1a

FIG. 1b

14

FIG. 2a

FIG. 2b

FIG. 3